# EUROPEAN PATENT APPLICATION

(11) **EP 3 301 946 A1**
(43) Date of publication of application: **04.04.2018**
(21) Application number: 16191287.8
(22) Date of filing: 29.09.2016
(51) Int. Cl.: H04Q 1/02

(54) **PATCH PANEL**

(71) Applicant: 3M Innovative Properties Company, Saint Paul, MN 55133-3427 (US)
(72) Inventor: Kuepper, Peter, 42285 Wuppertal (DE); Bund, Christine Brigitte, 42111 Wuppertal (DE); Bunkowski, Pawel, 18-400 Lomza (PL)
(74) Representative: Müller, Bruno

(57) **Abstract**

Patch panel assembly (1) comprising
a) a base panel (10) with an upper surface (50), oriented horizontally when the patch panel assembly is in use, and
b) a jack support panel (60), oriented vertically when the patch panel assembly is in use, for affixing jacks (80) therein, which can receive fibre-optic or electrical network patch cord plugs (90).

The base panel defines a first sliding space (140) on its upper surface (50), extending in the width direction (100) from one side edge (20, 30) towards the opposite side edge (30, 20) of the base panel, through which sliding space an electronic module (500) can be slid, in the width direction, from outside of the patch panel assembly over the first side edge (20) and over the upper major surface (50) into the patch panel assembly (1) towards the second side edge (30).

## Description

This disclosure relates to patch panels in communication networks using fibre-optic signals or electrical signals for data transmission, and in particular to patch panels having a port monitoring system or that can be upgraded to have a port monitoring system. The disclosure also relates to a process for such an upgrade.

Patch panels are network infrastructure devices which allow to connect certain incoming communication lines with specific end user devices using so-called patch cords. Patch cords are short cables that have a communication plug at each end. One end of a patch cord is plugged into a port of a patch panel that is connected to a specific incoming communication line, the other end is plugged into another port of the same of a different patch panel that is connected to the end user device. Thereby the patch cord establishes a communication connection between the incoming communication line and the specific end user device.

Where many patch panels and even more patch cords are in use, some effort is required for a human installer to keep track of all the connections established, to identify the correct port for plugging a new patch cord into a patch panel, or for finding a faulty connection. Traditionally, paper lists were kept for recording patch connections. In recent years, port-monitoring systems have been developed that can monitor ports of patch panels. The U.S. patent application US 2015/0039788 A1, for example, claims a system for monitoring a network architecture, comprising at least one sensor configured to read cable identification data from a memory device attached to a cable plug, and a controller configured to send the cable identification data to a network management device over a universal serial bus connection. Other port monitoring systems can interrogate RFID tags on plugs of patch cords inserted into a patch panel.

Not all newly-sold patch panels are equipped with a port monitoring system. However, certain "dumb" patch panels can be upgraded to "intelligent" patch panels by retrofitting electronic components to the patch panel, and connecting these to port monitoring equipment inside or outside the patch panel. Mostly, at least one of the electronic components needs to be arranged close to the jacks or sockets in the ports of the patch panel, in order to interrogate the jacks or plugs inserted into the jacks. The position of the electronic component may be critical, because adjacent patch panel ports may be narrow and very close to each other. An upgradeable patch panel is described in the International Patent Application WO 2016/089611 A1.

Most patch panels have the jacks arranged in ports on their front panels, while incoming communication lines and data cables towards end user devices exit the patch panels at their rear sides. In patching cabinets, many patch panels are arranged above each other in racks. Numerous patch cables form a "curtain" in front of the front panel, so that neither the front panel nor the rear side of these patch panels is easily accessible, when many patch connections have been made. When an electronic component is to be inserted into a patch panel from the rear, e.g. when retrofitting or when a replacement is required, a large number of data cables have to be pushed aside carefully in order for a human installer to be able to position the electronic component properly in the patch panel. Often, the entire rack needs to be pulled away from a wall to make the rear side of a patch panel in the rack accessible for insertion of an electronic component for upgrading. This work is time consuming and brings a risk of the electronic component being damaged, of cables being damaged or pulled out inadvertently.

The present disclosure seeks to address these problems. The disclosure provides a patch panel assembly comprising
a) a base panel which comprises an upper major surface, which is oriented horizontally when the patch panel assembly is in use, which extends laterally in a width direction between a first side edge and an opposed second side edge, and which extends rearwardly in a depth direction between a front edge and an opposed rear edge; and
b) a jack support panel, which is oriented vertically when the patch panel assembly is in use, is connected to the base panel at the front edge of the base panel, and comprises a jack support element for affixing one or more jacks therein, which jacks are adapted to receive fibre-optic or electrical network patch cord plugs,
characterized by the base panel defining a first sliding space on the upper major surface of the base panel, extending in the width direction from the first side edge towards the second side edge, through which first sliding space an electronic module can be slid, in the width direction, from an outside of the patch panel assembly over the first side edge and over the upper major surface into the patch panel assembly towards the second side edge.

A patch panel device according to the present disclosure makes use of the fact that most patch panels are easier to access from their sides than from the front or the rear, because no cables enter or exit a traditional patch panel on its sides. Certain patch panels are laterally accessible as they are mounted, others can be drawn forward so that they project from the block of remaining patch panels in a rack, whereby their sides become accessible. A sliding space on the upper major surface of the base panel, allowing the electronic module to be slid into the patch panel assembly in the width direction, i.e. laterally, facilitates placement of the electronic module, because no cables have to be moved, and the module does not have to be manoeuvred through a clutter of cables into the patch panel assembly, possibly even without the installer being able to see the module. The lateral insertion also provides that patch cord plugs can stay plugged into the jack support panel, and no data lines need to be disconnected from the patch panel device, so that no active signal connections on the patch panel device need to be interrupted in order to integrate the electronic module. Rather, the "life line" operation can continue while upgrading the patch panel device.

The base panel is a panel that forms the bottom of the patch panel device. It may be of rectangular shape, so that the first side edge and the second side edge are parallel to each other, the front edge and the rear edge are parallel to each other, and the side edges are orthogonal to the front edge.

The base panel may generally be flat. In particular, its upper major surface may be flat. However, a generally flat upper major surface that has smaller protrusions or recesses or raised portions is still considered to be flat, as long as more than 50% of the surface area lie in one geometric plane.

The base panel may consist of, or comprise, a single piece of sheet metal.

The jack support panel can support jacks, into which plugs at the end of patch cords can be inserted. It is connected to the base panel at the front edge of the base panel. If the jack support panel is a separate element, it may be connected to the base panel by being attached, directly or indirectly, i.e. via intermediate elements. In some embodiments, the jack support panel and the base panel are formed as a single piece, e.g. a single piece of sheet metal, suitably bent. An additional face plate may be arranged in front of the jack support panel.

Jacks, or sockets, may be fibre-optic jacks or copper jacks. Fibre-optic jacks are adapted to receive plugs of fibre-optic patch cords transmitting optical communication signals. A fibre-optic jack is sometimes also called a coupling. The fibre-optic jack may be adapted to receive standardized fibre-optic plugs or connectors, e.g. SC or LC type fibre-optic connectors. On the other hand, copper jacks are adapted to receive plugs of patch cords transmitting electrical communication signals. A copper jack may be adapted to receive standardized plugs, e.g. RJ45 type electrical connectors.

Since the jacks must be accessible from the front of the patch panel assembly, the jack support panel is located at a front portion of the base panel. Space rearward of the jack support panel and above the upper major surface of the base panel is the interior of the patch panel assembly. The jack support element in the jack support panel may, for example, be a grid structure providing openings in which jacks can be affixed, for example via latches.

In one aspect of the present disclosure, the electronic module is a module of a port monitoring system or of a patch panel port management system. In some embodiments, the electronic module comprises a printed circuit board ("PCB"). In some embodiments, it comprises means for wireless communication, e.g. antennae like RFID antennae. In certain of these embodiments, the electronic module comprises a plurality of antennae, arranged next to each other such that their locations, in width direction, match the locations of the jacks in the jack support element, when the electronic module is in its desired final position in the patch panel assembly. In the desired final position, RFID antennae may be located below corresponding jacks, so that the jacks and/or plugs inserted into the jacks can be interrogated via the RFID antennae.

The electronic module may be of an elongated shape. Its length direction may be the direction in which it is slid into the patch panel assembly, i.e. the width direction of the base panel. The length of the electronic module may be equal to the width of the base panel or less than the width of the base panel, so that the electronic module can be accommodated completely in the patch panel assembly. In certain embodiments of a patch panel assembly according to the present disclosure, the first sliding space is adapted to accommodate an electronic module of an elongated shape which has a length equal to, or less than, the width of the base panel.

A typical electronic module is a flat, L-shaped element, comprising a printed circuit board (PCB) with electronic components affixed thereto, and a sheet metal cover arranged above the electronic components on one surface of the PCB. The PCB may have rectangular protrusions, in the plane of the PCB, arranged in a row next to one another on the longest edge of the PCB. Each of the protrusions may support an RFID antenna for communication with a corresponding RFID antenna on a network patch cord plug. Such an electronic module may have, for example, a length of about 40-45cm, a breadth of about 8-12cm, and a thickness of about 1-2cm. Its bottom surface may be flat, so that it can easily slide through a sliding space on the upper major surface of a patch panel assembly as described herein.

The sliding space, i.e. the first sliding space unless stated otherwise, on the upper major surface of the base panel is a three-dimensional volume of space which provides a physical path to slide the electronic module into the patch panel assembly from the first side edge. In order to facilitate sliding, the sliding space is free of elements protruding into the sliding space, e.g. free of protrusions of the base panel, that might impede sliding of the module. The base panel defines the first sliding space by having its structural elements, electric or electronic components and routing paths of cables arranged such that they leave the sliding space empty.

The patch panel assembly of the present disclosure may be adapted to accommodate a specific type of electronic module. Specifically, the sliding space of the patch panel assembly may be adapted to allow insertion of a specific type of electronic module. It may be adapted, for example, by providing a clear volume that corresponds to the contour of the electronic module. If the electronic module has a maximum height of 2cm, for example, the sliding space advantageously has a height of 2.1 cm or more above the upper major surface of the base panel, throughout the length of the sliding path from the first side edge to the second side edge of the base panel, so that the electronic module encounters no protrusions or other obstacles when it is slid into the patch panel assembly.

The sliding space includes the portion of the first side edge of the base panel over which the electronic module is slid, from the outside of the patch panel assembly, into the interior of the patch panel assembly.

The sliding space may be large enough to allow sliding the entire electronic module into the patch panel assembly.

The sliding space is arranged on the upper major surface of the base panel, i.e. the volume of space is delimited, at the bottom, by the upper major surface. The upper major surface may be adapted to support the electronic module during and after the module being slid. It may, for example, be adapted by comprising a smooth surface portion in the area of the sliding space.

The sliding space extends in the width direction of the base panel, so that the electronic module can be slid in that width direction. It may have a longitudinal shape, with its long direction being parallel to the front edge of the base panel.

Before insertion, the electronic module is located entirely outside the patch panel assembly. It is then slid over the first side edge into the sliding space towards the second side edge. While sliding, the electronic module may be in sliding contact with the upper major surface of the base panel.

In one aspect of this disclosure, the patch panel assembly may comprise an abutment to limit the first sliding space in the width direction, i.e. in the sliding direction. In some embodiments, the sliding space extends towards the second side edge up to an abutment which limits further sliding towards the second side edge. In some of these embodiments, the abutment is arranged at the second side edge. In other ones of these embodiments, the abutment is arranged at a distance from the second side edge. In others of these embodiments, the abutment is arranged at location of the sliding space which limits further sliding towards the second side edge when the electronic module is in a central position relative to the first and the second side edge. This central position may be a position in which lateral edges of the module have equal distances towards their nearest side edge of the base panel.

In some embodiments, the sliding space extends between the first side edge and the second side edge, i.e. from the first side edge up to the second side edge. This would facilitate sliding the electronic module through the entire patch panel assembly.

Certain electronic modules are to interrogate the jacks of the patch panel assembly via wireless communication. For wireless communication, it is generally beneficial if the antennae of the emitter and the receiver are close to each other. Such electronic modules, or at least portions of these, should therefore be arranged close to the jack support panel, when the modules are in their desired final position in the patch panel assembly. The jack support panel, in turn, is arranged at the front edge of the base panel. Therefore, in one aspect of the disclosure, the first sliding space is arranged such that at least a portion of the electronic module is adjacent to the front edge, once the entire electronic module is slid, in the width direction, into the patch panel assembly.

On the other hand, it may be desirable that sliding the electronic module laterally into the patch panel assembly through the sliding space (i.e. through the first sliding space) does not position the electronic module in its desired final position close to the jacks yet, but that a further sliding is required in order to attain the desired final position. Further sliding may be in the width direction or in the depth direction. This may be advantageous, for example, for purposes of locking the module in the desired final position or for being able to connect wires to the module before moving it into its desired final position. Therefore, in an alternative aspect, the first sliding space is arranged such that the distance between any portion of the electronic module and the front edge is 5mm or 1cm or more, once the entire electronic module is slid, in the width direction, into the patch panel assembly.

It may be beneficial in scenarios where only one side of the patch panel assembly is accessible if the electronic module can be slid laterally into the patch panel assembly from either one of the two side edges of the base panel, e.g. from the left to the right, or from the right to the left. Therefore, in one aspect of this disclosure, the sliding space may be further adapted such that the electronic module can be slid, in a width direction, from an outside of the patch panel assembly over the second side edge through the first sliding space over the upper major surface into the patch panel assembly towards the first side edge.

When laterally sliding the electronic module into the patch panel assembly, the module may not be completely visible to the installer, e.g. because it is partly hidden by patch cords. A guiding structure in the patch panel assembly may thus be helpful for positioning the module adequately. Therefore, in one aspect of the present disclosure, the patch panel assembly may comprise a guide element, such as a guiding bar or a vertical cylindrical pin, for guiding the electronic module when the electronic module is slid in the width direction through the sliding space into the patch panel assembly. In some embodiments, the guide element is a vertical cylindrical pin. Alternatively, the guide element may comprise a plurality of vertical cylindrical pins. The curved outer surface of the pin, or of each pin, forms a guiding surface which can guide the electronic module in horizontal directions. In other embodiments the guide element comprises a flat vertical guiding surface delimiting the first sliding space, such as to guide the electronic module when the electronic module is slid in the width direction through the sliding space into the patch panel assembly. In some of these embodiments, the flat vertical guiding surface extends horizontally in the width direction.

In some of these latter embodiments, the flat vertical guiding surface is a surface of a guiding bar attached to the upper major surface of the base panel. In other embodiments, the guide element comprises a portion of the base panel. In some of these embodiments the flat vertical guiding surface may be formed by a portion of the base panel. In those embodiments, the base panel may be shaped such as to form an upward fold, where the fold forms the guide element, and a surface of the fold forms the flat vertical guiding surface.

Sliding the electronic module into the patch panel assembly through the first sliding space in the width direction of the base panel may not be sufficient to bring it into its desired final position within the patch panel assembly. In order to better circumvent obstacles or in order to better fix the position of the module, it may be desirable that the electronic module can be slid in a different direction, e.g. in the depth direction of the base panel, after being slid in the width direction. In one aspect of the present disclosure, the patch panel therefore may further comprise a second sliding space on the upper major surface of the base panel, extending in the depth direction between the first sliding space and the front edge, through which second sliding space the electronic module can be slid, in the depth direction, from a position in the first sliding space over the upper major surface towards the front edge of the base panel.

In some embodiments, the second sliding space extends in the depth direction between the first sliding space and the front edge, such that the electronic module can be slid, in the depth direction, from a central position in the first sliding space over the upper major surface towards the front edge of the base panel.

The final desired position of the electronic module in the patch panel assembly may be a position at the front edge of the base panel, next to the jack support panel. Hence, in some embodiments, the second sliding space is adapted such that the electronic module can be slid through the second sliding space, in the depth direction, from a position in the first sliding space over the upper major surface up to the front edge of the base panel.

The patch panel assembly may comprise one or more fixing elements for fixing an electronic module in a desired final position within the patch panel assembly. Suitable fixing elements may be, for example, screws, clips, pins, latches, adhesive patches, or mechanical fasteners. Specifically, the electronic module may comprise one or more fixing means for fixing the electronic module in a desired final position within the patch panel assembly. The patch panel assembly may then comprise one or more engagement means to engage corresponding fixing means on the electronic module. The desired final position of the electronic module may be defined by the location of fixing elements in the patch panel assembly, which are adapted to engage with suitably adapted engagement means of the electronic module in order to fix the electronic module in the patch panel assembly.

In one aspect of this disclosure, the electronic module is comprised in the patch panel assembly as described above. The patch panel assembly as described above may thus further comprise an electronic module, arranged in the patch panel assembly on at least a portion of the first sliding space. In embodiments where the patch panel assembly comprises a first and a second sliding space, the patch panel assembly may comprise an electronic module, arranged in the patch panel assembly on at least a portion of the first sliding space or on at least a portion of the second sliding space.

In a further aspect of the present disclosure, it provides a patch panel assembly comprising an electronic module, e.g. one as described in the previous paragraph, in combination with a jack affixed in the jack support element and a network patch cord plug inserted into the jack, wherein the network patch cord plug comprises means for wireless or optical communication with the electronic module, and wherein the electronic module comprises means for wireless or optical communication with the network patch cord plug.

In a further aspect of the present disclosure, it is provided a process of upgrading a patch panel assembly as described herein, comprising the step of sliding an electronic module, in the width direction, from an outside of the patch panel assembly over the first side edge and over the upper major surface into the patch panel assembly towards the second side edge.

The following Figures exemplify particular embodiments of the present disclosure:
- Fig. 1: Perspective view of a first patch panel assembly according to the present disclosure, an electronic module, jacks and patch cables connected thereto;
- Fig. 2: Perspective view of the first patch panel assembly, the patch cables, and the electronic module slid into the patch panel assembly; and
- Fig. 3: Perspective view of a second patch panel assembly according to the present disclosure, jacks and patch cables connected thereto.

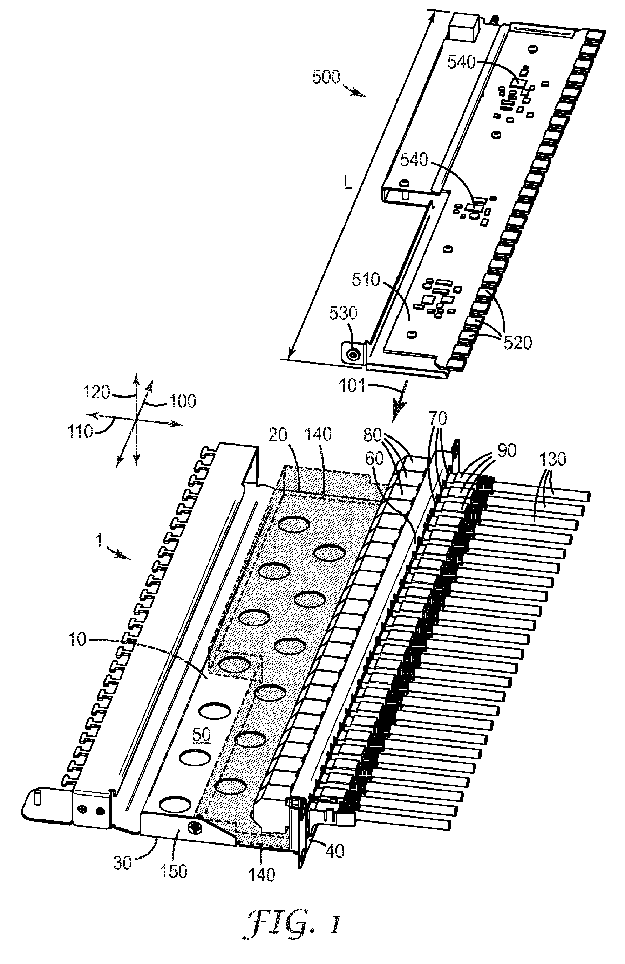

**Figure 1** illustrates, in perspective view, a first patch panel assembly 1 in accordance with the present disclosure, and an electronic module 500 that can be laterally slid into the patch panel assembly 1.

The first patch panel assembly 1 is for mounting in a rack. It comprises a base panel assembly 10, formed from sheet metal, oriented horizontally when mounted in the rack, and having an upper major surface 50. It extends laterally, i.e. in a width direction 100, between a first side edge 20 and an opposed second side edge 30. In a depth direction 110, it extends between a front edge 40 and an opposed rear edge, which is not visible in Figure 1. When mounted in a rack, other similar patch panel assemblies will be mounted above and below, i.e. spaced in vertical directions 120, the first patch panel assembly 1.

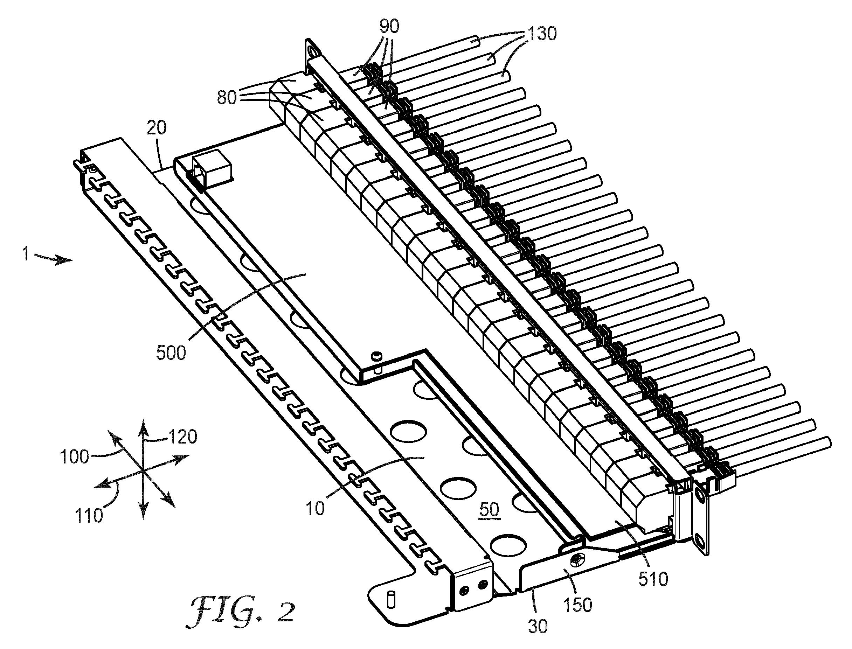

The first patch panel assembly 1 further comprises a vertical jack support panel 60, integrally formed with the base panel 10 from the same piece of sheet metal. The jack support panel 60 is connected to the base panel 10 at the front edge 40 of the base panel 10. The jack support panel 60 comprises jack support elements 70, which are frames around individual openings, arranged laterally next to each other in a row, in each of which a modular jack 80 can be affixed via a latch. Into each of the jacks 80 an RJ45 connector 90 at the end of an electrical network patch cable 130 is inserted. The connectors 90 are equipped with RFID antennae (not shown) which allow communication between each of the connectors 90 and the electronic module 500, when the electronic module 500 is slid into the first patch panel assembly 1 into its desired final position. The desired final position is shown in Figure 2.

The electronic module 500 is an element of a patch panel port management system. It comprises a printed circuit board ("PCB") 510 which has electronic components 540 arranged on it, and twenty-four RFID antennae integrated into the same number of protrusions 520 of the PCB 510. The location of the protrusions 520 match the locations of the jacks 80 in the jack support element 60, when the electronic module 500 is in its desired final position in the patch panel assembly 1. In the desired final position, the RFID antennae of the electronic module 500 are in close proximity to the RFID antennae of the individual connectors 90, facilitating reliable communication and suitable performance of the patch panel port management system.

The electronic module 500 has an elongated shape, with its length L equal to the width of the patch panel assembly 1.

The base panel 10 defines a first sliding space 140 on the upper major surface 50 of the base panel 10, through which the electronic module 500 can be slid into the first patch panel assembly 1 and into its desired final position.

Before sliding, the electronic module 500 is located outside the first patch panel assembly 1, as is shown in Figure 1. Sliding occurs in a width direction 100, specifically in the width direction 101 from the first side edge 20 towards the second side edge 30 of the base panel 10. Correspondingly, the first sliding space 140 extends in the width direction 100 from the first side edge 20 towards the second side edge 30, and up to the second side edge 30. The electronic module 500 is slid over the first side edge 20 and over the upper major surface 50 towards the second side edge 30.

The first sliding space 140 is a three-dimensional volume, located just above the upper major surface 50 of the base panel 10, which is kept free of any protrusions in the first patch panel assembly 1, so that the sliding space 140 is free of obstacles. When viewed laterally, i.e. in directions 100, the sliding space 140 must generally be larger, at least slightly larger, than the contour of the electronic module 500 that is to be slid into the patch panel assembly 1.

The first sliding space 140 is arranged such that the front edges of the protrusions 520 of the electronic module 500 are adjacent to the front edge 40 of the base panel 10, once the electronic module 500 has been slid laterally into the patch panel assembly 1.

An abutment 150 limits the sliding space 140 in the width direction 100, and thereby makes positioning of the electronic module 500 within the patch panel assembly 1 easier. When sliding the electronic module 500 against the abutment 150, the electronic module 500 is in a suitable position.

Once fully slid laterally into the patch panel assembly 1, the electronic module 500 is not in its desired final position yet. Rather, it requires to be slid a smaller distance in a depth direction 110 towards the front edge 40, so that portions of the PCB protrusions 520 protrude through corresponding openings in the jack support panel 60. For that second movement, the patch panel assembly 1 comprises a second sliding space (not shown), free of protrusions, through which the electronic module 500 can be slid, in the depth direction 110, from its position in the first sliding space 140, over the upper major surface 50 towards, and up to, the front edge 40 of the base panel 10. Once the electronic module 500 is in its desired final position, it can be secured to the abutment 150 of the patch panel assembly 1 using a nut 530 and a suitable screw.

**Figure 2** shows, in a perspective view from a different viewpoint, the first patch panel assembly 1 with the electronic module 500 in its desired final position within the first patch panel assembly 1. The protrusions 520 of the PCB 510 of the electronic module 500 are now located at the front edge 40 underneath the jacks 80.

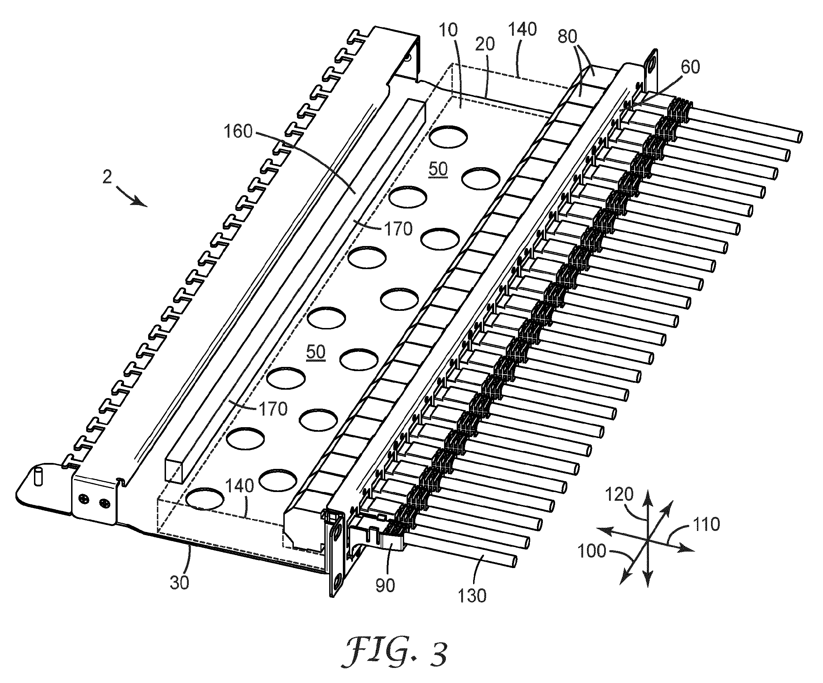

A second, similar patch panel assembly 2 according to the present disclosure is illustrated in **Figure 3****,** again shown with patch cables 130 plugged into the jacks 80. The only differences to the first patch panel assembly 1 are that there is no abutment 150 at the second edge 30, and that a guiding bar 160 is attached to the base panel 10 on its upper major surface 50. The guiding bar 160 extends horizontally in the width direction 100. It has a square cross section and provides a vertical guiding surface 170 which extends horizontally in the width direction 100. It delimits the first sliding space 140. When sliding the electronic module 500 into the patch panel assembly 2, the rear edge of the electronic module 500 is guided by the guiding surface 170. This provides for a smoother sliding process.

Due to the absence of an abutment 150 at the second side edge 30, the electronic module 500 can also be slid, in the width direction 100, from outside the second patch panel assembly 2, over the second edge 30 through the sliding space 140 over the upper major surface 50 into the second patch panel assembly 2 towards the first side edge 20. Hence the electronic module 500 can be laterally slid into the second patch panel assembly 2 from either side. The guiding surface 170 of the guiding bar 160 guides the electronic module 500 independent of the direction from which it is slid into the patch panel assembly 2.

## Claims

1. Patch panel assembly (1, 2) comprising
a) a base panel (10) which
- comprises an upper major surface (50),
- is oriented horizontally when the patch panel assembly is in use,
- extends laterally in a width direction (100) between a first side edge (20) and an opposed second side edge (30), and
- extends rearwardly in a depth direction (110) between a front edge (40) and an opposed rear edge;
and
b) a jack support panel (60), which
- is oriented vertically when the patch panel assembly is in use,
- is connected to the base panel at the front edge of the base panel, and
- comprises a jack support element (70) for affixing one or more jacks (80) therein, which jacks are adapted to receive fibre-optic or electrical network patch cord plugs (90),
**characterized by**
the base panel defining a first sliding space (140) on the upper major surface of
the base panel, extending in the width direction from the first side edge towards
the second side edge,
through which first sliding space an electronic module (500) can be slid, in the width direction (100), from an outside of the patch panel assembly over the first side edge (20) and over the upper major surface (50) into the patch panel assembly (1, 2) towards the second side edge (30).

2. Patch panel assembly according to claim 1, wherein the sliding space (140) is further adapted such that the electronic module can be slid, in a width direction (100), from an outside of the patch panel assembly over the second side edge (30) through the first sliding space (140) over the upper major surface (50) into the patch panel assembly (1, 2) towards the first side edge (20).

3. Patch panel assembly according to claim 1 or claim 2, wherein the first sliding space is adapted to accommodate an electronic module of an elongated shape, which has a length (L) equal to, or less than, the width of the base panel.

4. Patch panel assembly according to any one of the preceding claims, wherein the first sliding space is arranged such that at least a portion of the electronic module (500) is adjacent to the front edge (40), once the entire electronic module is slid, in the width direction (100), into the patch panel assembly.

5. Patch panel assembly according to any one of claims 1 to 3, wherein the first sliding space is arranged such that the distance between any portion of the electronic module (500) and the front edge (40) is 5 mm or more, once the entire electronic module is slid, in the width direction (100), into the patch panel assembly.

6. Patch panel assembly according to any one of the preceding claims, further comprising a guide element (160), such as a guiding bar or a vertical cylindrical pin, for guiding the electronic module when the electronic module is slid in the width direction through the sliding space into the patch panel assembly.

7. Patch panel assembly according to claim 6, wherein the guide element comprises a flat vertical guiding surface (170) delimiting the first sliding space (140), such as to guide the electronic module (500) when the electronic module is slid in the width direction through the sliding space into the patch panel assembly.

8. Patch panel assembly according to claim 6 or 7, wherein the guide element (160) comprises a portion of the base panel (10).

9. Patch panel assembly according to any one of the preceding claims, further comprising a second sliding space on the upper major surface (50) of the base panel (10), extending in the depth direction (110) between the first sliding space (140) and the front edge (40),
through which second sliding space the electronic module (500) can be slid, in the depth direction (110), from a position in the first sliding space (140) over the upper major surface (50) towards the front edge (40) of the base panel (10).

10. Patch panel assembly according to claim 9, wherein the second sliding space is adapted such that the electronic module (500) can be slid through the second sliding space, in the depth direction (110), from a position in the first sliding space (140) over the upper major surface (50) up to the front edge (40) of the base panel (10).

11. Patch panel assembly according to any one of the preceding claims, further comprising an abutment (150), arranged at the second side edge (30), to limit the first sliding space (140) in the width direction (100).

12. Patch panel assembly according to any one of the preceding claims, further comprising an electronic module (500), arranged in the patch panel assembly (1, 2) on at least a portion of the first sliding space (140).

13. Patch panel assembly according to claim 12, in combination with a jack (80) affixed in the jack support element (70) and a network patch cord plug (90) inserted into the jack,
wherein the network patch cord plug comprises means for wireless or optical communication with the electronic module (500), and wherein the electronic module comprises means for wireless or optical communication with the network patch cord plug (90).

14. Process of upgrading a patch panel assembly (1, 2) according to any one of claims 1 to 11, comprising the step of sliding an electronic module (500), in the width direction (100), from an outside of the patch panel assembly over the first side edge (20) and over the upper major surface (50) into the patch panel assembly (1, 2) towards the second side edge (30).
